# EUROPEAN PATENT APPLICATION

(11) **EP 2 708 135 A1**
(43) Date of publication of application: **19.03.2014**
(21) Application number: 12785742.3
(22) Date of filing: 10.05.2012
(51) Int. Cl.: A21D 13/00

(54) **METHOD FOR MANUFACTURING AN ICE-CREAM FILLED PIZZA**

(30) Priority: 13.05.2011 ES
(71) Applicant: Panaderia Rial, S.L., 15873 La Coruña (ES)
(72) Inventor: PENSADO RIVAS, Gonzalo, E-15873 La Coruña (ES)
(74) Representative: Lahidalga de Careaga, Jose Luis
(86) International application number: PCT/ES2012/070331
(87) International publication number: WO 2012/156560

(57) **Abstract**

In a specific example, with given quantities, the procedure involves in the first place the preparation of a dough based on 1kg of wheat flour, 400 ml of white wine, 200 ml of olive oil, 120 g of egg, 28 g of salt and 25 g of yeast, all of them placed in a kneading machine for 20 minutes, then removing the dough and leaving it to stand for 15 minutes, dividing the piece obtained into 200 g sections which are left to stand for 60 minutes, so that these divided pieces form the bases and covers of the final pizza. 300 g of ice-cream, 6 g of guar gum, 6 g of wheat starch and 1.2 g of monosodium glutamate are added to each base or cover and both cover and base are superimposed with the ingredients mentioned, the whole being placed in an oven at a temperature of 200°C for 18 minutes. Halfway through the cooking, after 9 minutes, it is removed from the oven and painted with egg, then returned to the oven and left there until finally cooked, to give an ice-cream-filled pizza.

## Description

### OBJECT OF THE INVENTION

This invention refers to a method for manofacturing a pizza filled with ice-cream, its evident aim to obtain a pizza whose main ingredient is ice-cream, added in proportions appropriate to the total pizza mass following the mixing of the pizza's various components.

The object of the invention is to obtain a pizza with a new flavour, incorporating ice-cream as the main ingredient.

### BACKGROUND OF THE INVENTION

There are, as is well-known, various types of pizza based on a suitably prepared dough to which the associated ingredients area added and which may be of a multiplicity of varieties and flavours, but always food products, ranging from cheese to chorizo, bacon, vegetables etc.

The existence of pizzas incorporating ice-cream as ingredient is unknown.

### DESCRIPTION OF THE INVENTION

The particular feature of the pizza proposed is that it includes an ice-cream as main ingredient, and the pizza in question is made according to a method based on the following operational phases:
- To make a dough with wheat flour, white wine, olive oil, egg, salt and yeast as the basis, in an approximate percentage of between 54% and 58% of wheat flour, between 20% and 24% of white wine, between 9% and 13% of olive oil, between 6% and 8% of egg, between 1% and 1.4% salt and between 0.9% and 1.3% of yeast.
- To place all those items in a kneading machine and mix them for 20 minutes, with the dough reaching a temperature of 24°C.
- The dough obtained is removed from the kneading machine and allowed to rest as a block for 15 minutes.
- The dough is divided into pieces and left to rest for 60 minutes, some of the pieces to be used as bases and others as cover, and which are spread out.
- A quality of ice-cream is added to both the piece forming the base and that comprising the cover, estimated at one sixth of the weight of that base or cover, also adding one fiftieth of the amount of ice-cream of guar gum, plus the same amount of wheat starch, finally with the addition of monosodium glutamate some five times less than the amount of the wheat starch and guar gum referred to above.
- The products obtained with the base piece and cover with the addition of the ice-cream, guar gum, wheat starch and monosodium glutamate are placed in an oven for 18 minutes at a temperature of 200°C.
- Halfway through the cooking, the piece is painted with a small amount of egg and is returned to the oven for final cooking, obtaining a pizza with a base and cover and, between the two, the ice-cream with the components associated with it as explained above.

### A PRACTICAL EMBODIMENT

1 kg of wheat flour, 400 ml of white wine, 200 ml of olive oil, 120 g of egg, 28 g of salt and 25 g of yeast are placed in a kneading machine and mixed for 20 minutes, the dough finally reaching a temperature of 24°C.

The mixed product is removed from the kneading machine and left to stand as a block for 15 minutes, then divided into 200 g pieces. They are then rolled into balls and left to rest for 60 minutes, to obtain the bases and covers which have been spread, the ice-cream then added to the base and closed with the cover.

That is, the 200 g piece of dough would contain approximately 113.44 g of wheat flour; 22.6 ml of olive oil; 45.37 ml of wine; 13.61 g of egg; 2.04 g of fine salt and 2.83 g of yeast.

300 g of ice-cream, 6 g of guar gum, 6 g of wheat starch and 1.2 g of monosodium glutamate are added to the 200 g piece of those referred to as base and cover, and the product formed by the base and cover and incorporating the ice-cream, guar gum, wheat starch and monosodium glutamate is placed in an oven at a temperature of 200°C, remaining there for 18 minutes; halfway through the cooking, i.e. after 9 minutes, the resulting dough is painted with 15 g of egg, and this is then all returned to the oven until finally cooked, to give a pizza whose dough is made based on wheat flour, white wine, olive oil, egg, salt and yeast, and containing ingredients based on ice-cream, guar gum, wheat starch and monosodium glutamate, with a pleasant or optimal flavour for consumption.

## Claims

1. A Method for manufacturing an ice-cream filled pizza, characterised because it comprises the following phases:
• Mixing of wheat flour, white wine, olive oil, egg, salt and yeast in an approximate percentage of 54%-58% of wheat flour, 20%-24% of white wine, 9%-13% of olive oil, 6%-8% of egg, 1%-1.4% of salt, and 0.9%-1.3% of yeast;
• All said components are placed in a kneading machine and kneaded for 20 minutes, the dough reaching a final temperature of 24°C;
• The dough is removed from the kneading machine and left to stand for 15 minutes;
• The dough is cut into pieces weighing approximately one ninth of the total dough weight, each sectioned piece constituting a base and a cover of the final product;
• A quantity of ice-cream is added to the base and cover piece amounting to approximately one sixth of the total weight of said piece, also with the addition of guar gum and wheat starch, each approximately fifty times less than the ice-cream, and finally adding about five times less monosodium glutamate than wheat starch and guar gum;
• The cover with the ice-cream, guar gum, wheat starch and monosodium glutamate ingredients, is placed over the associated base, also with the ice-cream, guar gum, wheat starch and monosodium glutamate in the proportions referred to;
• The product obtained by superimposition of the base and cover with their ingredients is placed in a 200°C oven for 18 minutes;
• The product is removed after 9 minutes and painted with a small amount of egg;
• The product painted with egg is returned to the oven, at the same temperature, until finally cooked 18 minutes following the start, resulting in an end product of a pizza filled with ice-cream, its fundamental ingredient.
